# EUROPEAN PATENT APPLICATION

(11) **EP 3 796 448 A1**
(43) Date of publication of application: **24.03.2021**
(21) Application number: 18918606.7
(22) Date of filing: 18.05.2018
(51) Int. Cl.: H01M 10/052, H01M 10/0567, H01M 10/42, H01M 4/13, H01M 10/058, H01M 10/0587, H01M 4/38

(54) **ACTIVE MATERIAL SEPARATION TYPE LITHIUM-SULFUR BATTERY**

(30) Priority: 14.05.2018 KR 20180055038
(71) Applicant: J-Innotech Co., Ltd., Eumbong-myeon Asan-si, Chungcheongnam-do 31415 (KR)
(72) Inventor: PARK, Sang Sun, Yesan-gun Chungcheongnam-do 32432 (KR); SAHGONG, Sun Hye, Daegu 41573 (KR); KO, Ah Lim, Asan-si Chungcheongnam-do 31509 (KR)
(74) Representative: advotec.
(86) International application number: PCT/KR2018/005690
(87) International publication number: WO 2019/221316

(57) **Abstract**

Provided is an active material separation-type lithium-sulfur battery including a non-sulfur-based positive electrode and a non-aqueous electrolyte solution including active sulfur, which is capable of realizing enhanced battery capacity.

## Description

### [Technical Field]

The present invention relates to an active material separation-type lithium-sulfur battery. More specifically, the present invention relates to a lithium-sulfur battery including a non-sulfur-based positive electrode and a non-aqueous electrolyte solution including active sulfur.

### [Background Art]

The capacity, output, lifespan, and the like of a secondary battery are important factors in determining the performance of a secondary battery, and these factors are, basically, greatly affected by the material selection of a positive electrode and a negative electrode. A lithium-sulfur primary battery or lithium-sulfur secondary battery operates by lithium ions moving in an electrolyte interposed between a positive electrode and a negative electrode like a conventional lithium ion secondary battery. However, unlike a conventional lithium ion secondary battery in which lithium ions are intercalated into the crystal structure of an electrode active material to modify the electrode structure, since the lithium-sulfur battery uses only a simple oxidation-reduction reaction between sulfur and lithium ions, there is no significant limitation on the electrode structure compared to a conventional lithium ion secondary battery, and the lithium-sulfur battery may have higher capacity in theoretically the same volume. Due to these characteristics, the lithium-sulfur battery consisting of sulfur which is a positive electrode and lithium metal which is a negative electrode, assuming that monomeric sulfur (Sg) having a ring structure is completely reacted to become lithium sulfide (Li₂S), has a theoretical capacity of 1,675 mAh/g and a theoretical energy density of 2,600 Wh/kg which is about 2.6 times to 5.6 times higher energy density than those of other conventional battery systems (Ni/MH battery: 450 Wh/kg, Li/FeS: 480 Wh/kg, Li/MnO₂: 1,000 Wh/kg, and Na/S: 800 Wh/kg).

In addition, a conventional transition metal oxide-lithium ion secondary battery may have a problem of heavy metal pollution caused by using, in a positive electrode, an oxide of nickel (Ni), cobalt (Co), or manganese (Mn) having higher density than the density of a heavy metal of 5 g/mL or more, whereas a lithium-sulfur battery is environmentally friendly because it excludes the above-mentioned pollution sources and is a non-toxic material. Additionally, the lithium-sulfur battery has an advantage in that sulfur which is a positive electrode material is an abundant resource and is inexpensive.

However, the lithium-sulfur battery has not yet been widely used commercially because of poor lifespan characteristics and low volumetric energy density compared to a currently commercially available lithium ion secondary battery. Lithium metal which is a negative electrode of the lithium-sulfur battery is known as a material having poor electrochemical reversibility and low stability. Meanwhile, polysulfide which is a discharge product of sulfur moves to a negative electrode to irreversibly react with lithium, and thus an active material is lost, resulting in lowered battery capacity. For these two reasons, it is understood that the lifespan characteristics of the lithium-sulfur battery are not good.

Furthermore, some studies have shown that as an amount of sulfur loaded per unit area of the positive electrode of the lithium-sulfur battery increases, the performance of the battery is degraded, and an amount of loaded sulfur is only about 3 mg/cm², which is good for a unit mass capacity of 1,000 mAh/g and a two-phase potential plateau (Ke Sun et al., Journal of Electrochemical Energy Conversion and Storage, vol. 13, pp. 021002-1, 021002-5, May 2016.).

Conventionally, a method of stacking as much sulfur as possible per unit area of the positive electrode by applying sulfur to a large thickness on an aluminum current collector was used to increase the capacity of the lithium-sulfur battery. However, this method may cause several problems in which lifespan is shortened by release of some sulfur from the surface of an electrode away from a current collector as charging and discharging are repeated, conductivity is degraded by reducing a conductive path, and the output of the battery is degraded.

In addition, the positive electrode of a conventional lithium-sulfur battery was manufactured by mixing sulfur, a binder, and a carbon-based conductive material with a solvent to prepare a slurry and then applying the slurry onto a current collector or manufactured by compounding mesoporous carbon with sulfur. However, these methods have problems such as a complicated manufacturing process, a manufacturing time prolonged by insufficient elevation of a drying temperature in the manufacture of an electrode due to the volatility of sulfur, and a sulfur utilization rate rapidly decreased as an amount of sulfur loaded per unit area of the positive electrode increases.

### [Prior-Art Documents]

### [Patent Documents]

KR 10-2014-0122886 A

### [Disclosure]

### [Technical Problem]

The present invention is directed to providing an active material separation-type lithium-sulfur battery. Specifically, the present invention relates to a positive electrode active material separation-type lithium-sulfur battery that is a lithium-sulfur battery including a non-sulfur-based positive electrode and a non-aqueous electrolyte solution including active sulfur.

### [Technical Solution]

One aspect of the present invention provides a lithium-sulfur battery which includes: a non-sulfur-based positive electrode; a lithium metal negative electrode; and a porous separator interposed between the non-sulfur-based positive electrode and the lithium metal negative electrode and impregnated with a non-aqueous electrolyte solution including active sulfur.

According to the present invention, the active sulfur may be included in at least one phase among a solid phase and a liquid phase in the non-aqueous electrolyte solution.

According to the present invention, the active sulfur may be included in an amount of 0.1 M to 4 M with respect to the non-aqueous electrolyte solution.

According to the present invention, the non-sulfur-based positive electrode may have an apparent density of 0.01 g/cm³ to 1.3 g/cm³.

According to the present invention, the non-sulfur-based positive electrode may be a metal foil, a metal foam, a metal mesh, carbon fiber felt, or carbon paper.

According to the present invention, the non-sulfur-based positive electrode may be a material coated with a carbon-based material. Specifically, the non-sulfur-based positive electrode may be a metal foil, a metal foam, a metal mesh, carbon fiber felt, or carbon paper, which is coated with a carbon-based material.

According to the present invention, the non-aqueous electrolyte solution may further include one or more lithium salts selected from LiPF₆, LiBF₄, LiSbF₆, LiAsF₆, LiClO₄, LiCF₃SO₃, LiC₄F₉SO₃, LiSbF₆, LiN(SO₂CF₃)₂, LiNO₃, and LiBETI.

According to the present invention, the lithium salt may be included in an amount of 0.1 M to 3.0 M with respect to the non-aqueous electrolyte solution.

According to the present invention, the lithium-sulfur battery may have a bobbin-type construction in which the lithium metal negative electrode surrounds the non-sulfur-based positive electrode impregnated with the non-aqueous electrolyte solution.

According to the present invention, the lithium-sulfur battery may have a spiral-type construction in which sheets including the non-sulfur-based positive electrode, the porous separator, and the lithium metal negative electrode which are sequentially stacked are wound.

### [Advantageous Effects]

Since a lithium-sulfur battery according to an embodiment of the present invention includes active sulfur in a non-aqueous electrolyte solution, a sufficient amount of active sulfur is loaded compared to a conventional lithium-sulfur battery, and thereby enhanced unit capacity can be realized. Furthermore, the lithium-sulfur battery according to an embodiment of the present invention can solve the degradation of battery performance which is caused by the release of sulfur as the amount of loaded sulfur increases in a conventional lithium-sulfur battery.

The lithium-sulfur battery according to an embodiment of the present invention can include active sulfur via a simple method such as addition of sulfur to an electrolyte solution, such that manufacturing costs can be reduced. In addition, the lithium-sulfur battery according to an embodiment of the present invention can be manufactured by omitting a conventional manufacturing process such as the preparation of a carbon-sulfur composite to allow sulfur to be included in a positive electrode, such that manufacturing costs can be reduced.

### [Description of Drawings]

FIG. 1 is a schematic diagram of a lithium-sulfur battery according to an embodiment of the present invention.
FIG. 2 is a schematic diagram of a bobbin-type lithium-sulfur battery according to an embodiment of the present invention.
FIG. 3 is a schematic diagram of a spiral-type lithium-sulfur battery according to an embodiment of the present invention.
FIG. 4 illustrates the voltage (V) and unit capacity (mAh/g) of a lithium-sulfur battery manufactured according to Example 1 when the battery is discharged at a current value of about 1 mA.
FIG. 5 illustrates the voltage (V) and unit capacity (mAh/g) of a lithium-sulfur battery manufactured according to Example 2 when the battery is discharged at a current value of about 1 mA.
FIG. 6 illustrates the voltage (V) and unit capacity (mAh/g) of a lithium-sulfur battery manufactured according to Example 3 when the battery is discharged at a current value of about 1 mA.
FIG. 7 illustrates the voltage (V) and unit capacity (mAh/g) of a lithium-sulfur battery manufactured according to Example 4 when the battery is discharged at a current value of about 1 mA.
FIG. 8 illustrates the voltage (V) and unit capacity (mAh/g) of a lithium-sulfur battery manufactured according to Example 5 when the battery is discharged at a current value of about 1 mA.
FIG. 9 illustrates the voltage (V) and unit capacity (mAh/g) of a lithium-sulfur battery manufactured according to Example 6 when the battery is discharged at a current value of about 1 mA.
FIG. 10 illustrates the voltage (V) and unit capacity (mAh/g) of a lithium-sulfur battery manufactured according to Comparative Example 1 when the battery is discharged at a current value of about 1 mA.
FIG. 11 illustrates the voltage (V) and unit capacity (mAh/g) of a lithium-sulfur battery manufactured according to Comparative Example 2 when the battery is discharged at a current value of about 1 mA.

### [Modes of the Invention]

In the specification, when a member is referred to as "being on" another member, this encompasses not only the case in which the two members are in contact with each another but also the case in which the two members have a third member therebetween.

In the specification, when a component is referred to as "containing", "including", "comprising", or "having" another component, it is to be understood that the component does not exclude other components but may include other components as well, unless specifically stated otherwise.

In the specification, unless otherwise mentioned, the "unit capacity" refers to discharge capacity per unit mass of active sulfur loaded in a lithium-sulfur battery.

Hereinafter, a lithium-sulfur battery according to the present invention will be described in detail.

According to an embodiment of the present invention, there is provided a lithium-sulfur battery which includes: a non-sulfur-based positive electrode; a lithium metal negative electrode; and a porous separator interposed between the non-sulfur-based positive electrode and the lithium metal negative electrode and impregnated with a non-aqueous electrolyte solution including active sulfur.

The lithium-sulfur battery according to an embodiment of the present invention may be used as a primary battery or a secondary battery.

Unlike a conventional lithium-sulfur battery, the lithium-sulfur battery according to the present invention does not include sulfur in a positive electrode thereof and includes a non-sulfur-based positive electrode. Specifically, the lithium-sulfur battery according to the present invention includes a non-sulfur-based positive electrode, and active sulfur as a positive electrode active material is included in a non-aqueous electrolyte solution. That is, the lithium-sulfur battery according to the present invention may be an active material separation-type lithium-sulfur battery, specifically, a positive electrode active material separation-type lithium-sulfur battery. The lithium-sulfur battery according to the present invention may be manufactured by a simple method in which sulfur is injected into a non-aqueous electrolyte solution unlike a conventional method in which a carbon-sulfur composite is prepared to allow sulfur to be included in a positive electrode, such that manufacturing costs may be greatly reduced. Furthermore, since sulfur is added to a non-aqueous electrolyte solution in the lithium-sulfur battery according to the present invention, an amount of loaded sulfur may significantly increase to enhance battery capacity, and accordingly, the discharge capacity per unit mass of sulfur may also be enhanced.

According to an embodiment of the present invention, the active sulfur may be included in at least one phase among a solid phase and a liquid phase in the non-aqueous electrolyte solution. Specifically, the active sulfur may be present in a dispersed or dissolved state in the non-aqueous electrolyte solution. The active sulfur may be included in a solid phase and/or a liquid phase in the non-aqueous electrolyte solution. When the active sulfur is included in a liquid phase, the active sulfur may be present in a dissolved or sol-gel state in the non-aqueous electrolyte solution. In addition, when the active sulfur is included in a solid phase, the active sulfur may be in a state in which it is not dissolved any longer in the non-aqueous electrolyte solution and is present as elemental sulfur.

The active sulfur may be elemental sulfur and a sulfide thereof. Specifically, the active sulfur may be elemental sulfur and/or a sulfur-based compound having a sulfur-sulfur bond (S-S bond). The active sulfur may store and produce electrical energy through an oxidation-reduction reaction in which the oxidation number of S decreases while an S-S bond is broken during discharging and an S-S bond is reformed while the oxidation number of S increases during charging. As an example, the active sulfur may be at least one among elemental sulfur and lithium sulfide. Specifically, the active sulfur may be monomeric sulfur (S₈) having a ring structure and/or lithium sulfide formed by reacting the monomeric sulfur (Sg) with a lithium salt included in the non-aqueous electrolyte solution. The lithium sulfide may be present in the form of Li₂S₈, Li₂S₆, Li₂S₄, or the like. When the lithium-sulfur battery is discharged, sulfur released from Li₂S₈ may react, and when the sulfur is completely reacted, it is present in the form of Li₂S. Furthermore, during charging of the discharged lithium-sulfur battery, the Li₂S may be converted to Li₂S₄, Li₂S₆, Li₂S₈, or the like to become a state capable of re-discharging.

According to an embodiment of the present invention, the active sulfur may be included in an amount of 0.1 M to 4 M, 0.1 M to 2 M, 0.5 M to 1.5 M, or about 1.0 M with respect to the non-aqueous electrolyte solution. The content of the active sulfur may be the content of elemental sulfur, specifically, S₈, added to the non-aqueous electrolyte solution. That is, the content of the active sulfur may mean the content of active sulfur in solid and liquid phases which is included in the non-aqueous electrolyte solution. When the content of the active sulfur falls within the above-described range, the discharge capacity per unit mass of active sulfur can be maximized. When the content of the active sulfur exceeds the above-described range, the active sulfur is not sufficiently ionized in the non-aqueous electrolyte solution, and the amount of the active sulfur remaining in a solid phase increases, and thus unit capacity may be decreased. Therefore, the content of the active sulfur may be adjusted appropriately within the above-described range to induce an efficient reaction of active sulfur included in the non-aqueous electrolyte solution.

According to an embodiment of the present invention, the non-sulfur-based positive electrode may be a metal foil, a metal foam, a metal mesh, carbon fiber felt, or carbon paper. Specifically, the non-sulfur-based positive electrode does not include sulfur, and an electrode current collector itself, such as a metal foil, a metal foam, a metal mesh, carbon fiber felt, or carbon paper, may be used as the non-sulfur-based positive electrode.

In addition, according to an embodiment of the present invention, a current collector of the non-sulfur-based positive electrode may be a metal foil, a metal foam, a metal mesh, carbon fiber felt, or carbon paper, which is coated with a carbon-based material. Specifically, the non-sulfur-based positive electrode does not include sulfur and may be an electrode formed by coating at least a portion of an electrode current collector such as a metal foil, a metal foam, a metal mesh, carbon fiber felt, or carbon paper with a carbon-based material. The carbon-based material may be applied by applying a slurry including a carbon-based material to be described below and a binder onto at least one surface of the electrode current collector and drying the same.

According to an embodiment of the present invention, the carbon-based material may include one or more selected from the group consisting of carbon black, Ketjen black, acetylene black, graphite, and graphene. However, the present invention is not limited thereto, and any carbon-based material may be used as long as it is used as a conductive material in the art.

That is, according to an embodiment of the present invention, the non-sulfur-based positive electrode may be a positive electrode current collector. In addition, the non-sulfur-based positive electrode may be a positive electrode current collector coated with a carbon-based material.

According to an embodiment of the present invention, the non-sulfur-based positive electrode may have an apparent density of 0.01 g/cm³ to 1.3 g/cm³, 0.01 g/cm³ to 1.0 g/cm³, 0.1 g/cm³ to 1.3 g/cm³, 0.1 g/cm³ to 1.0 g/cm³, or 0.1 g/cm³ to 0.7 g/cm³. When the apparent density of the non-sulfur-based positive electrode falls within the above-described range, it is easy to permeate an electrolyte solution, and thus high unit capacity can be realized.

The porous separator may be prepared using a highly porous/permeable material such as felt, paper, or a microporous plastic film. The porous separator needs to have resistance to attack by an electrolyte solution and other battery components under cell potential. As an example, the porous separator may be a porous separator made of glass, plastic, or ceramic. In addition, the porous separator may be a polymeric separator with a porous or microporous net structure to confine the non-aqueous electrolyte solution. However, the present invention is not limited thereto, and any porous separator may be used as long as it is commonly used in the art.

According to an embodiment of the present invention, the non-aqueous electrolyte solution may further include a lithium salt. Specifically, the non-aqueous electrolyte solution may include a lithium salt and the active sulfur.

According to an embodiment of the present invention, the lithium salt may include one or more selected from LiPF₆, LiBF₄, LiSbF₆, LiAsF₆, LiClO₄, LiCF₃SO₃, LiC₄F₉SO₃, LiSbF₆, LiN(SO₂CF₃)₂, LiNO₃, and LiBETI. The lithium salt may react with the active sulfur in the non-aqueous electrolyte solution to form lithium sulfide. The lithium sulfide is converted to lithium sulfide including sulfur having a lower atomic number and enables the lithium-sulfur battery to be discharged.

According to an embodiment of the present invention, the lithium salt may be included in an amount of 0.1 M to 3.0 M, 0.1 M to 2.0 M, 0.5 M to 1.5 M, or about 1.0 M with respect to the non-aqueous electrolyte solution.

In addition, according to an embodiment of the present invention, the lithium salt and the active sulfur may be included in a molar ratio of 1.5:1 to 1:1.5, specifically, about 1:1. When the molar ratio of the lithium salt and the active sulfur falls within the above-described range, the active sulfur can be utilized at a high rate in the non-aqueous electrolyte solution, thereby the battery capacity per unit mass of the active sulfur can be maximized.

According to an embodiment of the present invention, the non-aqueous electrolyte solution may include an organic non-aqueous solvent. Specifically, as the organic non-aqueous solvent, 1,3-dioxolane, 2-methyltetrahydrofuran, polyethylene glyme dimethyl ether, tetrahydrofuran, and/or an ether-based solvent may be used. As the organic non-aqueous solvent, dibutyl ether, 2-methyltetrahydrofuran, polyethylene glyme dimethyl ether, tetrahydrofuran, and the like may be used. Specifically, the organic non-aqueous solvent may include one or more selected from the group consisting of dimethoxyethane, diglyme, triglyme, tetraglyme, 1,3-dioxolane, dimethyl ether, diethyl ether, N-methylpyrrolidone, 3-methyl-2-oxazolidone, dimethylformamide, sulfolane, dimethylacetamide, dimethyl sulfoxide, dimethyl sulfate, ethylene glycol diacetate, dimethyl sulfite, and ethylene glycol sulfite, and when the solvent is used in combination of one or more thereof, a mixing ratio may be appropriately adjusted according to desired battery performance.

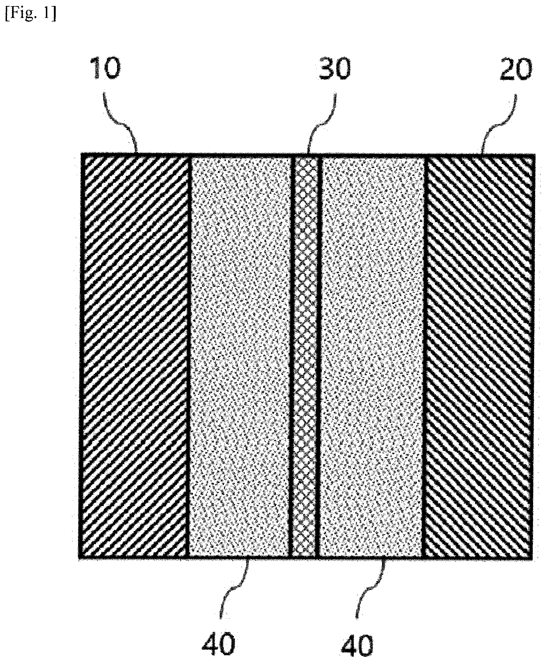

A schematic diagram of the lithium-sulfur battery according to an embodiment of the present invention is shown in FIG. 1. Specifically, referring to FIG. 1, a non-sulfur-based positive electrode 10 and a lithium metal negative electrode 20 are provided with a porous separator 30 interposed therebetween, wherein the porous separator 30 is impregnated with a non-aqueous electrolyte solution 40 and the non-aqueous electrolyte solution 40 is provided between the non-sulfur-based positive electrode 10 and the lithium metal negative electrode 20. However, the present invention is not limited to the structure shown in FIG. 1, and an additional member may be further included.

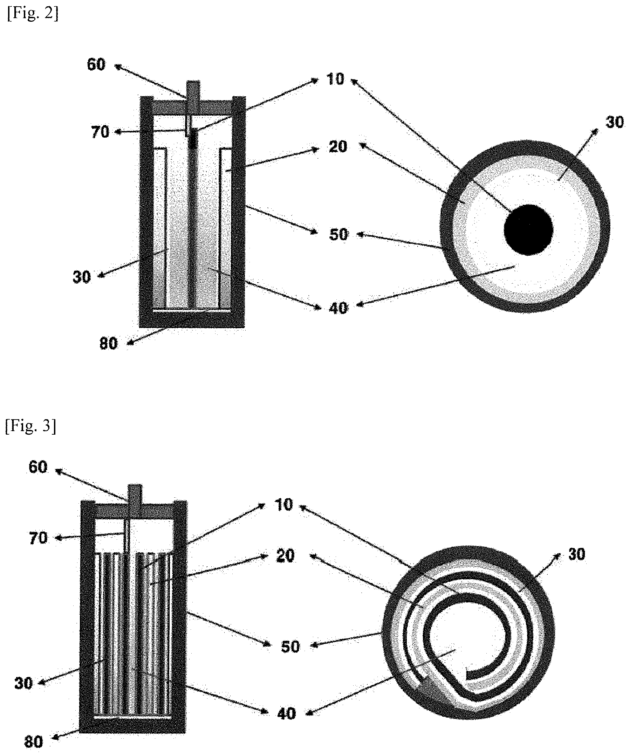

According to an embodiment of the present invention, the lithium-sulfur battery may have a bobbin-type construction in which the lithium metal negative electrode surrounds the non-sulfur-based positive electrode impregnated with the non-aqueous electrolyte solution. FIG. 2 is a schematic diagram of the bobbin-type lithium-sulfur battery. Specifically, FIG. 2 shows the longitudinal sectional view and horizontal sectional view of the bobbin-type lithium-sulfur battery in which a non-sulfur-based positive electrode 10 at the center of the battery is impregnated with a non-aqueous electrolyte solution 40, a lithium metal negative electrode 20 is provided on the inner wall of a battery case 50, and a porous separator 30 is interposed between the non-sulfur-based positive electrode 10 and the lithium metal negative electrode 20.

According to an embodiment of the present invention, the lithium-sulfur battery may have a spiral-type construction in which sheets including the non-sulfur-based positive electrode, the porous separator, and the lithium metal negative electrode which are sequentially stacked are wound. FIG. 3 is a schematic diagram of the spiral-type lithium-sulfur battery. Specifically, FIG. 3 shows the longitudinal sectional view and horizontal sectional view of the spiral-type lithium-sulfur battery in which sheets prepared by sequentially stacking a non-sulfur-based positive electrode 10, a porous separator 30, and a lithium metal negative electrode 20 are wound, and the porous separator 30 is impregnated with a non-aqueous electrolyte solution 40.

Hereinafter, the present invention will be described in detail with reference to embodiments. However, the embodiments of the present invention may be modified into several different forms, and the scope of the present invention is not limited to the embodiments to be described below. The embodiments of the present invention are provided so that this disclosure will be thorough and complete, and will fully convey the concept of embodiments to those skilled in the art.

### [Example 1]

### Manufacture of non-sulfur-based positive electrode

Ketjen black and polyethylene oxide were mixed to prepare a slurry, and the slurry was applied onto one surface of Ni foam and then dried, thereby manufacturing Ni foam coated with Ketjen black as a non-sulfur-based positive electrode.

### Preparation of non-aqueous electrolyte solution

Dimethoxyethane, diglyme, and 1,3-dioxolane were mixed in a volume ratio of 1:1:1 to prepare an organic solvent, about 1 M LiTFSi was dissolved in the organic solvent, and sulfur (S₈) powder was then added to the electrolyte solution as shown in the following Table 1, thereby preparing a non-aqueous electrolyte solution including active sulfur.

### Manufacture of lithium-sulfur battery

To measure the performance of the lithium-sulfur battery according to the present invention, a 2032 coin cell was prepared. Specifically, a set of 2032 coin cell parts consisting of a cap, a button, a gasket, and the like was prepared. Ni mesh was welded to the lower surface of a can-shaped button, and lithium foil (016) as a negative electrode was attached onto the Ni mesh. Afterward, a porous polyethylene separator (Celgard, LLC, thickness: 0.02 mm) (018) and a gasket were put into the button to block a negative electrode part, and the above-prepared electrolyte solution was then injected so that the separator was sufficiently impregnated with the electrolyte solution. Subsequently, the above-manufactured non-sulfur-based positive electrode (016) and a cap were disposed on the porous separator impregnated with the electrolyte solution, thereby manufacturing a 2032 coin cell-type lithium-sulfur battery using a clamping machine.

The resistance of the lithium-sulfur battery thus manufactured was checked by measuring the impedance of the lithium-sulfur battery at 100 kHz to 200 MHz using a battery test system, and then while the battery was discharged at a current value of about 1 mA, unit capacity was calculated by dividing a discharge capacity value, which was obtained by multiplying a current value by a time, by the mass of loaded sulfur (S₈).

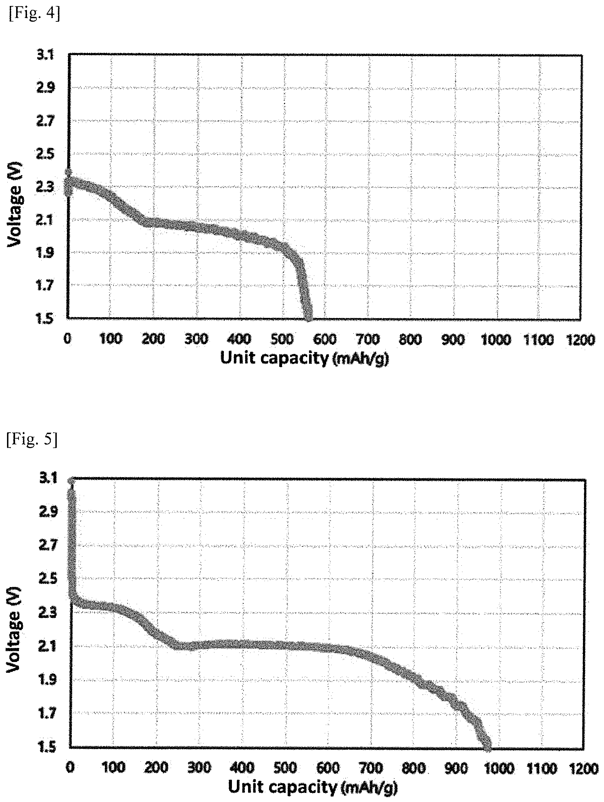

FIG. 4 illustrates the voltage (V) and unit capacity (mAh/g) of the lithium-sulfur battery manufactured according to Example 1 when the battery is discharged at a current value of about 1 mA. Referring to FIG. 4, it can be seen that the lithium-sulfur battery manufactured according to Example 1 exhibited a unit capacity of 555 mAh/g and potential plateaus at about 2.3 V and about 2.0 V.

### [Example 2]

A lithium-sulfur battery was manufactured in the same manner as in Example 1, except that a porous separator made of micro-glass fiber (commercially available from H&V, thickness: 0.24 mm) was used.

FIG. 5 illustrates the voltage (V) and unit capacity (mAh/g) of the lithium-sulfur battery manufactured according to Example 2 when the battery is discharged at a current value of about 1 mA. Referring to FIG. 5, it can be seen that the lithium-sulfur battery manufactured according to Example 2 exhibited a unit capacity of 978 mAh/g and potential plateaus at about 2.3 V and about 2.1 V.

### [Example 3]

A lithium-sulfur battery was manufactured in the same manner as in Example 2, except that an electrode manufactured by mixing Ketjen black and acetylene black in a weight ratio of 3:7 to prepare a slurry, applying the slurry onto one surface of Ni mesh, and drying the same was used as a non-sulfur-based positive electrode.

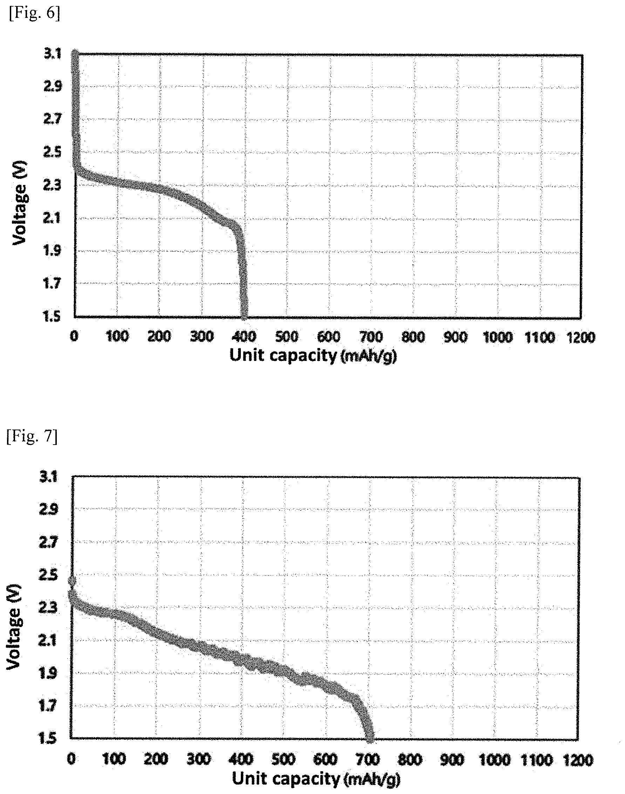

FIG. 6 illustrates the voltage (V) and unit capacity (mAh/g) of the lithium-sulfur battery manufactured according to Example 3 when the battery is discharged at a current value of about 1 mA. Referring to FIG. 6, it can be seen that the lithium-sulfur battery manufactured according to Example 3 exhibited a unit capacity of 401 mAh/g and potential plateaus at about 2.3 V and about 2.1 V.

### [Example 4]

A lithium-sulfur battery was manufactured in the same manner as in Example 2, except that sheet-type carbon paper made of carbon fiber was used as a non-sulfur-based positive electrode.

FIG. 7 illustrates the voltage (V) and unit capacity (mAh/g) of the lithium-sulfur battery manufactured according to Example 4 when the battery is discharged at a current value of about 1 mA. Referring to FIG. 7, it can be seen that the lithium-sulfur battery manufactured according to Example 4 exhibited a unit capacity of 704 mAh/g and potential plateaus at about 2.3 V and about 2.0 V.

### [Example 5]

A lithium-sulfur battery was manufactured in the same manner as in Example 2, except that carbon fiber felt was used as a non-sulfur-based positive electrode.

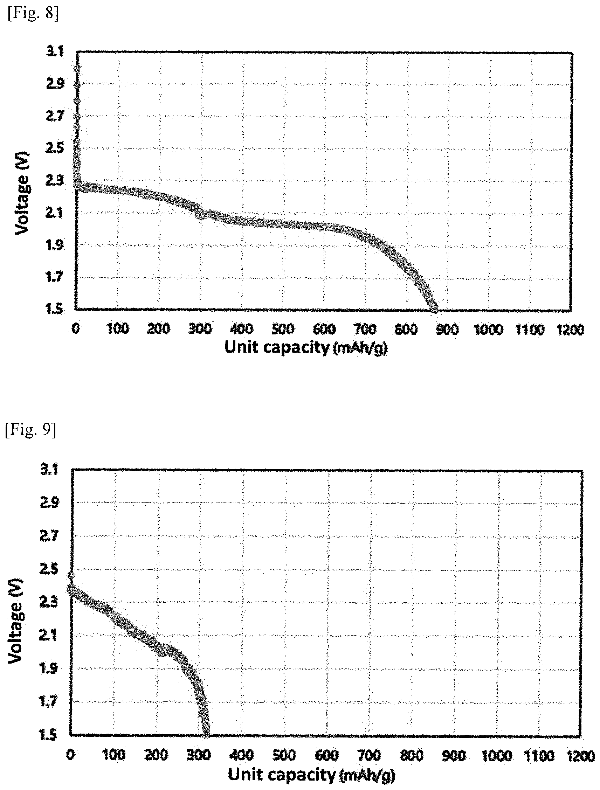

FIG. 8 illustrates the voltage (V) and unit capacity (mAh/g) of the lithium-sulfur battery manufactured according to Example 5 when the battery is discharged at a current value of about 1 mA. Referring to FIG. 8, it can be seen that the lithium-sulfur battery manufactured according to Example 5 exhibited a unit capacity of 869 mAh/g and potential plateaus at about 2.4 V and about 2.1 V.

### [Example 6]

A lithium-sulfur battery was manufactured in the same manner as in Example 2, except that nickel foam was used as a non-sulfur-based positive electrode.

FIG. 9 illustrates the voltage (V) and unit capacity (mAh/g) of the lithium-sulfur battery manufactured according to Example 6 when the battery is discharged at a current value of about 1 mA. Referring to FIG. 9, it can be seen that the lithium-sulfur battery manufactured according to Example 6 exhibited a unit capacity of 308 mAh/g and potential plateaus at about 2.4 V and about 2.0 V.

### [Comparative Example 1]

Sulfur (S₈) powder, Ketjen black, and polyethylene oxide were mixed in a weight ratio of 6:2:2 to prepare a slurry, and the slurry was applied onto carbon-coated aluminum foil and dried to manufacture a positive electrode. In addition, dimethoxyethane, diglyme, and 1,3-dioxolane were mixed in a volume ratio of 1:1:1 to prepare an organic solvent, and about 1 M LiTFSi was dissolved in the organic solvent to prepare a non-aqueous electrolyte solution.

A lithium-sulfur battery was manufactured in the same manner as in Example 1, except that the above-manufactured positive electrode and non-aqueous electrolyte solution were used.

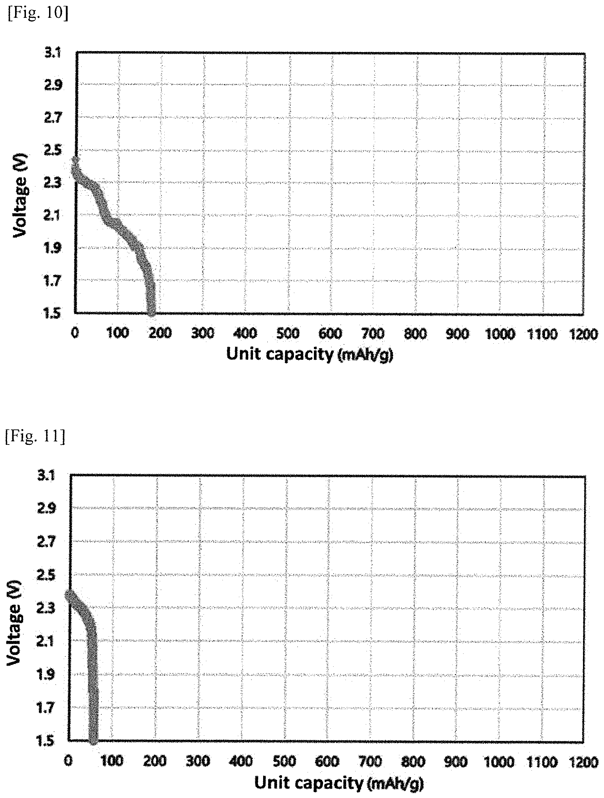

FIG. 10 illustrates the voltage (V) and unit capacity (mAh/g) of the lithium-sulfur battery manufactured according to Comparative Example 1 when the battery is discharged at a current value of about 1 mA. Referring to FIG. 10, it can be seen that the lithium-sulfur battery manufactured according to Comparative Example 1 exhibited a unit capacity of 180 mAh/g and potential plateaus at about 2.4 V and about 2.2 V.

### [Comparative Example 2]

Sulfur (Sg) powder, Ketjen black, and polyethylene oxide were mixed in a weight ratio of 90:5:5 to prepare a slurry, and the slurry was applied onto carbon-coated aluminum foil and dried to manufacture a positive electrode.

A lithium-sulfur battery was manufactured in the same manner as in Comparative Example 1, except that the manufactured positive electrode was used.

FIG. 11 illustrates the voltage (V) and unit capacity (mAh/g) of the lithium-sulfur battery manufactured according to Comparative Example 2 when the battery is discharged at a current value of about 1 mA. Referring to FIG. 11, it can be seen that the lithium-sulfur battery manufactured according to Comparative Example 2 exhibited a unit capacity of 58 mAh/g and a potential plateau at about 2.4 V.

The following Table 1 shows the results of measuring the amount of loaded sulfur, apparent density of the positive electrode, and unit capacity of the lithium-sulfur batteries according to Examples 1 to 6 and Comparative Examples 1 and 2.

**[Table 1]**

| | Amount of loaded Sg (mg/cm²) | Apparent density of positive electrode ( g/cm³) | Unit capacity (mAh/g) |
|---|---|---|---|
| Example 1 | 22.5 | 0.466 | 555 |
| Example 2 | 22.5 | 0.385 | 978 |
| Example 3 | 19 | 0.61 | 401 |
| Example 4 | 22.5 | 0.268 | 704 |
| Example 5 | 24 | 0.105 | 869 |
| Example 6 | 26 | 0.161 | 308 |
| Comparative Example 1 | 12 | 1.4 | 180 |
| Comparative Example 2 | 13 | 1.5 | 58 |

In Table 1, the apparent density of a positive electrode was calculated by determining a volume by multiplying the unit area (16 Ø=2.0 cm²) of the electrode by the thickness of the electrode and measuring mass. According to the results shown in Table 1, the lithium-sulfur batteries of Examples 1 to 6, including non-sulfur-based positive electrodes, were able to load a large amount of sulfur compared to Comparative Examples by loading sulfur (S₈) in a non-aqueous electrolyte solution. Furthermore, it can be confirmed that in the case of Examples 1 to 6, a unit capacity of at most 900 mAh/g or more was realized unlike in Comparative Examples, although sulfur (S₈) was loaded in a large amount of about 19 mg/cm² to 26 mg/cm². It is thought that this is because the apparent densities of the positive electrodes of Examples 1 to 6 are very low, such that the non-aqueous electrolyte solution is capable of easy permeation, and thus loaded sulfur (S₈) is effectively involved in the reaction. That is, in the case of the lithium-sulfur batteries according to Examples, since a non-aqueous electrolyte solution including a sufficient amount of active sulfur is capable of effectively permeating into a positive electrode having a low apparent density, loaded sulfur is allowed to effectively react, and thus unit capacity may be significantly enhanced.

### [List of Reference Numerals]

- 10:: non-sulfur-based positive electrode
- 20:: lithium metal negative electrode
- 30:: porous separator
- 40:: non-aqueous electrolyte solution
- 50:: battery case
- 60:: battery header
- 70:: lead
- 80:: insulator

## Claims

1. A lithium-sulfur battery comprising:
a non-sulfur-based positive electrode;
a lithium metal negative electrode; and
a porous separator interposed between the non-sulfur-based positive electrode and the lithium metal negative electrode and impregnated with a non-aqueous electrolyte solution including active sulfur.

2. The lithium-sulfur battery of claim 1, wherein the active sulfur is included in at least one phase among a solid phase and a liquid phase in the non-aqueous electrolyte solution.

3. The lithium-sulfur battery of claim 1, wherein the active sulfur is included in an amount of 0.1 M to 4 M with respect to the non-aqueous electrolyte solution.

4. The lithium-sulfur battery of claim 1, wherein the non-sulfur-based positive electrode has an apparent density of 0.01 g/cm³ to 1.3 g/cm³.

5. The lithium-sulfur battery of claim 1, wherein the non-sulfur-based positive electrode is a metal foil, a metal foam, a metal mesh, carbon fiber felt, or carbon paper.

6. The lithium-sulfur battery of claim 1, wherein the non-sulfur-based positive electrode is a metal foil, a metal foam, a metal mesh, carbon fiber felt, or carbon paper, which is coated with a carbon-based material.

7. The lithium-sulfur battery of claim 1, wherein the non-aqueous electrolyte solution further includes one or more lithium salts selected from LiPF₆, LiBF₄, LiSbF₆, LiAsF₆, LiClO₄, LiCF₃SO₃, LiC₄F₉SO₃, LiSbF₆, LiN(SO₂CF₃)₂, LiNO₃, and LiBETI.

8. The lithium-sulfur battery of claim 7, wherein the lithium salt is included in an amount of 0.1 M to 3.0 M with respect to the non-aqueous electrolyte solution.

9. The lithium-sulfur battery of claim 1, which has a bobbin-type construction in which the lithium metal negative electrode surrounds the non-sulfur-based positive electrode impregnated with the non-aqueous electrolyte solution.

10. The lithium-sulfur battery of claim 1, which has a spiral-type construction in which sheets including the non-sulfur-based positive electrode, the porous separator, and the lithium metal negative electrode which are sequentially stacked are wound.
